# EUROPEAN PATENT APPLICATION

(11) **EP 0 814 033 A1**
(43) Date of publication of application: **29.12.1997**
(21) Application number: 97109539.3
(22) Date of filing: 12.06.1997
(51) Int. Cl.: B65D 81/36, A47G 19/02, A01G 9/10

(54) **A package for food products**

(30) Priority: 17.06.1996 CH 1507/96
(71) Applicant: SOREMARTEC S.A., 6700 Arlon-Schoppach (BE); Ferrero S.p.A., I-12051 Alba (Cuneo) (IT); FERRERO OFFENE HANDELSGESELLSCHAFT m.b.H., D-60599 Frankfurt (DE)
(72) Inventor: Monetti, Fabrizio, 10138 Torino (IT)
(74) Representative: Bosotti, Luciano

(57) **Abstract**

The package comprises a container containing a certain quantity of products (P). At least one part (2) of the container is shaped like a pot enabling a certain quantity of growing medium (7) and germinable material (9) to be associated with the container (1) so that the said part (2) of the container can be reused as a pot for growing vegetable matter such as a flower.

## Description

The present invention relates to a package for food products, as in the preamble of Claim 1.

Packaging of this type is commonly used to package various products such as, for example, confectionery such as pralines, chocolates, miniature chocolate eggs and the like.

In this sector, it is becoming increasingly important to succeed in attracting consumers' attention not only to the intrinsic qualities of the product but also to the characteristics of the casing in which this is packaged. These characteristics may be either of an aesthetic or a functional nature, even involving the possibility of reuse of all or part of the packaging once this has completed its initial role of containing the products until they are eaten.

The object of the present invention is to provide an answer to these requirements, according to criteria which combine the possibility of providing an attractive container with the possibility of offering ways in which it can be reused which are particularly pleasing and effective, especially from a promotional point of view.

According to the present invention, this object is achieved by a package having the characteristics called for in the appended claims.

The invention will now be described, purely by way of non-limitative example, with reference to the appended drawings, in which:
Figure 1 is a general, partially cut away, elevational view of a package according to the invention, and
Figures 2 to 4 schematically illustrate the sequence of reuse of a package according to the invention.

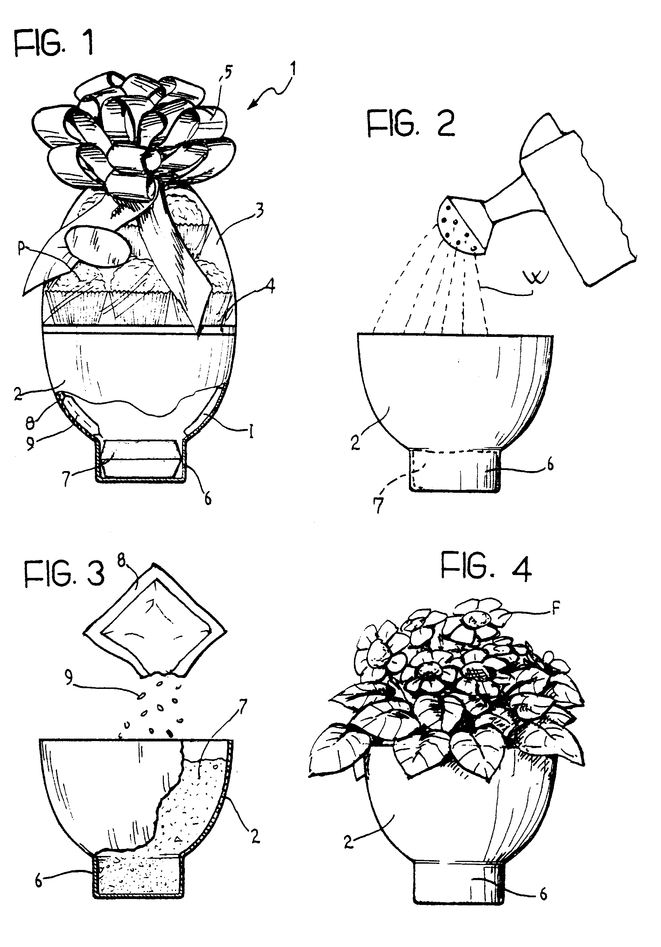

In the embodiment shown here, purely by way of example, the package in question, generally indicated 1 in Figure 1, is an egg-shaped container or casing which includes a lower part 2 and an upper part 3, joined together at their facing apertures, preferably with the interposition of an intermediate partition element 4.

The structure of the container described above should be taken as known, as should the specific manufacturing details of the two parts 2 and 3. These are generally constituted by half-shells or bowls of moulded plastics material, preferably non-transparent material for the lower part 2 and transparent material for the upper part 3. The container is generally completed by decorative elements 5 (bows, ribbons etc), for example on the top of the container. The structure described enables a package to be formed which includes an upper compartment defined by the part 3 and the partition 4, which contains a certain quantity of products P (for example pralines, chocolates, miniature chocolate eggs), and a lower compartment defined by the part 2, the top of which is closed by the partition 4, which provides a space for containing various articles. When, in a possible preferred embodiment, the part 2 is made of a non-transparent material, the said articles are hidden from view when the packaging is in its original condition for presentation to the public.

The reference to an egg-shaped container and/or to specific manufacturing details of the parts 2 and 3 and of associated elements described above should be seen as merely exemplary and therefore not in any way limitative of the scope of the present invention.

In one possible embodiment of the invention, the lower part 2 of the container has a base 6 of approximately cylindrical shape. This would preferably be a hollow, integral appendage of the shell 2 (preferably formed, as stated earlier, by a moulding operation) in which can be placed a certain quantity of peat 7 or other medium for growing vegetable matter such as plants. In addition or instead of peat (usually freeze-dried), compost or a synthetic growing medium could be associated with the container, together with a package, for example an envelope 8, containing a certain quantity of seeds 9 or other plant material which can germinate.

The growing medium 7 is generally packaged in a bag such as an airtight plastics bag, intended to seal the medium 7 until it is to be used so as to keep it fresh.

A sheet of instructions, indicated I, is also placed inside the part 2.

In a typical manner of reuse, once its initial role has been exhausted as the products P have gradually been consumed, the upper part 3 of the container can be discarded, along with the partition 4, in order to allow the lower part 2, which rests on its base 6, to be used as a sort of pot.

To this end, the growing medium 7 is removed from its bag, poured into the part 2 up to the level of the base 6 and sprinkled with water W so as to prepare it as a growing medium, for example by its gradual swelling as shown schematically in the sequence of Figures 2 and 3. This prepares the growing medium 7 for the sowing of the germinable material 9 once this has been removed from the envelope 8. The lower part 2 of the package 1 can thus be used, for example, as a pot to grow vegetation such as flowers F.

As stated earlier, it should be noted that the growing medium 7 has been described as a tablet of peat contained in a bag and placed in the base 6 of the part 2 of the package purely by way of example. This is true both for the choice of growing medium (which could be of a different nature) and the option of this growing medium 7 being arranged from the start inside the package 1. The invention also covers the possibility, in a variant which is not illustrated, of arranging the growing medium 7, the germinable material 9 and/or the instruction leaflet I outside the packaging container. In this case, the growing medium 7 would be placed inside the part 2 only once it was ready to be reused.

The above naturally also applies to the envelope 8 and the germinable material 9: these may also be arranged outside the packaging container at the start. In a further possible variant of the invention, the germinable material 9 could be mixed in the growing medium 7 from the start, with the addition of agents (known per se) able to inhibit germination until the moment at which the user wants to initiate germination, for example by watering the growing medium, by removing the airtight and light-proof bag originally containing the growing medium, etc.

## Claims

1. A package for food products (P) comprising a container with at least one part (2) having a general pot shape, characterised in that it includes, in association with the container:
- a growing medium (7) and
- a certain quantity of germinable plant material (9) whereby, once the products (P) have been removed, the at least one part (2) of the container is usable to receive the growing medium (7) and the germinable material (9) for the growth of a plant.

2. A package according to Claim 1, characterised in that the container (1) is generally egg-shaped, the at least one part (2) forming the lower part of the container (1).

3. A package according to Claim 2, characterised in that the base (2) has a hollow support appendage (6).

4. A package according to any one of Claims 1 to 3, characterised in that at least one of the growing medium (7) and the germinable material (9) is arranged initially inside the container (1).

5. A package according to Claim 3 and Claim 4, characterised in that the growing medium (7) is arranged initially inside the said support appendage (6).

6. A package according to any one of Claims 1 to 5, characterised in that the growing medium is selected from the group constituted by: soil, compost, peat, synthetic growing material.

7. A package according to any one of Claims 1 to 6, characterised in that it includes an envelope (8) for containing a certain quantity of germinable material (9).

8. A package according to any one of Claims 1 to 7, characterised in that the growing medium is selectively expandable by spraying with liquid (W).

9. A package according to Claim 1, characterised in that the germinable material (9) is distributed in the growing medium (7).

10. A package according to any one of Claims 1 to 9, characterised in that the growing medium (7) is housed in a protective container, such as a bag, for opening at the time of use.
